(19) Europäisches Patentamt / European Patent Office / Office européen des brevets

(11) **EP 3 203 219 B1**

(12) **FASCICULE DE BREVET EUROPEEN**

(45) Date de publication et mention
de la délivrance du brevet:
**05.09.2018 Bulletin 2018/36**

(51) Int Cl.:
**G01N 23/046** *(2018.01)*  **G01N 23/2204** *(2018.01)*
**G01N 23/2206** *(2018.01)*  **G01N 23/2258** *(2018.01)*

(21) Numéro de dépôt: **17153866.3**

(22) Date de dépôt: **31.01.2017**

(54) **PROCEDE DE CARACTERISATION D'UN ECHANTILLON COMBINANT UNE TECHNIQUE DE CHARACTERISATION PAR TOMGRAPHIE PAR RAYONS X ET UNE TECHNIQUE DE CARACTERISATION PAR SPECTROMETRIE DE MASSE A IONISATION SECONDAIRE**

VERFAHREN ZUR CHARAKTERISIERUNG EINER PROBE MIT HILFE EINER KOMBINATION VON RÖNTGENTOMOGRAPHIE UND SEKUNDÄRIONEN-MASSENSPEKTROMETRIE

METHOD FOR CHARACTERISING A SAMPLE COMBINING X-RAY TOMOGRAPHY WITH SECONDARY ION MASS SPECTROMETRY

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **02.02.2016 FR 1650811**

(43) Date de publication de la demande:
**09.08.2017 Bulletin 2017/32**

(73) Titulaire: **COMMISSARIAT À L'ÉNERGIE ATOMIQUE ET AUX ÉNERGIES ALTERNATIVES**
**75015 Paris (FR)**

(72) Inventeurs:
• **PRIEBE, Agnieszka**
**38000 GRENOBLE (FR)**
• **AUDOIT, Guillaume**
**38300 Bourgoin Jallieu (FR)**
• **BARNES, Jean-Paul**
**38500 Voiron (FR)**

(74) Mandataire: **Cabinet Camus Lebkiri**
**25 rue de Maubeuge**
**75009 Paris (FR)**

(56) Documents cités:
**WO-A1-2013/035082    WO-A1-2014/195998**

• **SEBASTIAN BEHRENS ET AL: "Linking environmental processes to the in situ functioning of microorganisms by high-resolution secondary ion mass spectrometry (NanoSIMS) and scanning transmission X-ray microscopy (STXM)", ENVIRONMENTAL MICROBIOLOGY, vol. 14, no. 11, 12 mars 2012 (2012-03-12) , pages 2851-2869, XP055304918, GB ISSN: 1462-2912, DOI: 10.1111/j.1462-2920.2012.02724.x**
• **BLEUET P ET AL: "Specifications for Hard Condensed Matter Specimens for Three-Dimensional High-Resolution Tomographies", MICROSCOPY AND MICROANALYSIS,, vol. 19, no. 3, 1 juin 2013 (2013-06-01), pages 726-739, XP001582238, ISSN: 1431-9276, DOI: DOI: HTTP://DX.DOI.ORG/10.1017/S1431927613000330 [extrait le 2013-04-10]**

**Description**

## DOMAINE TECHNIQUE

La présente invention concerne un procédé de caractérisation d'un échantillon combinant une technique de caractérisation par rayons X, par exemple une technique de tomographie par rayons X, et une technique de caractérisation par spectrométrie de masse à ionisation secondaire, par exemple une technique de spectrométrie de masse à ionisation secondaire à temps de vol.

## ETAT DE LA TECHNIQUE ANTERIEUR

Lorsque l'on désire analyser un échantillon, il est connu d'utiliser une technique de caractérisation par rayons X (par exemple une technique de tomographie par rayons X) ou bien encore une technique de caractérisation par spectrométrie de masse à ionisation secondaire (par exemple une technique de spectrométrie de masse à ionisation secondaire à temps de vol). Il est également connu d'utiliser ces deux techniques en combinaison. Ces dernières permettent d'analyser des petits échantillons et d'obtenir des informations telles que la structure cristalline ou la composition d'un échantillon. Un exemple que décrit une caractérisation par rayons X et par spectrométrie de masse à ionisation secondaire est SEBASTIAN BEHRENS ET AL: "Linking environmental processes to the in situ functioning of microorganisms by high-resolution secondary ion mass spectrometry (NanoSIMS) and scanning transmission X-ray microscopy (STXM)",(ENVIRONMENTAL MICROBIOLOGY, vol. 14, no. 11, 12 mars 2012 (2012-03-12), pages 2851-2869). Cependant, il reste très difficile de combiner ces deux techniques de manière efficace.

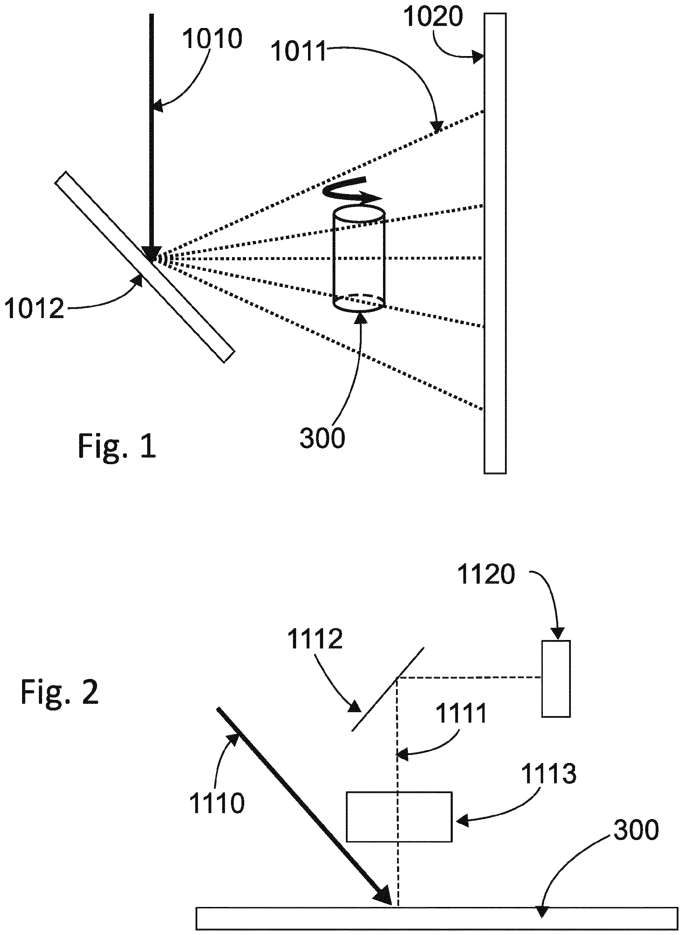

La technique de tomographie par rayons X est basée sur l'analyse du phénomène de diffraction du rayonnement X induit par l'échantillon. Le principe de fonctionnement de cette technique est illustré à la figure 1. Un faisceau d'électrons (1010) frappe une cible (1012) qui, en réaction, émet un rayonnement X (1011). Ce rayonnement est ensuite orienté vers un échantillon (300) en rotation et le motif de diffraction est mesuré à l'aide d'un capteur (1020). Il importe que ce phénomène de diffraction ne soit pas perturbé par des obstacles situés entre la source de rayons X (1012) et l'échantillon (300) ou bien encore entre l'échantillon (300) et le détecteur (1020). Pour réduire au minimum ces perturbations, il est connu de disposer l'échantillon (300) sur un porte-échantillon en forme de pointe, l'échantillon (300) étant soudé à l'extrémité de cette pointe. Ainsi, la présence d'éléments autour de l'échantillon est limitée et la diffraction n'est pas affectée par des perturbations dues à l'environnement.

La technique de caractérisation par spectrométrie de masse à ionisation secondaire consiste à soumettre à un faisceau d'ions l'échantillon à analyser. Le principe de fonctionnement de cette technique est illustré à la figure 2. Un faisceau d'ions (1110) frappe la surface de l'échantillon (300) à analyser qui, en réaction, émet des ions (1111), dit ions secondaires. Une partie de ces ions est captée par un extracteur (1113) puis dirigée par l'intermédiaire d'un miroir électrostatique (1112) vers un détecteur (1120). Afin d'obtenir une sensibilité de mesure satisfaisante, il importe de recueillir un maximum de ces ions secondaires (1111). Il est connu pour cela d'avoir recours à une cavité, l'échantillon (300) étant disposé dans cette cavité. Dans une telle configuration, les lignes de champ équipotentielles induites par la cavité vont agir comme une loupe en orientant les ions secondaires (1111) vers l'extracteur (1113), améliorant d'autant la sensibilité de la détection.

Si on dispose un échantillon à analyser sur une pointe, la mesure par rayons X se fait donc dans de bonnes conditions du fait de l'absence d'obstacle au voisinage de l'échantillon. Cependant, en l'absence d'élément entourant l'échantillon, les ions secondaires émis lors de l'étape de caractérisation par spectrométrie de masse à ionisation secondaire ne sont pas orientés vers l'extracteur et la précision de la mesure s'en trouve affectée.

Au contraire, si on dispose un échantillon à analyser dans une cavité, la mesure par spectrométrie de masse à ionisation secondaire devient plus sensible. Cependant, la mesure par rayons X va être affectée par la cavité située autour de l'échantillon et le motif de diffraction sera grandement perturbé, affectant ainsi la précision de la mesure.

On comprend dans ce cas que les exigences concernant l'environnement immédiat de l'échantillon pour chacune de ces deux techniques sont difficilement compatibles. Il est donc nécessaire, lorsque l'on réalise une analyse combinée, de privilégier l'une des deux mesures au détriment de la seconde.

Il existe donc un besoin de pouvoir utiliser un procédé de caractérisation permettant d'effectuer une analyse combinée tout en bénéficiant de la sensibilité maximale lors des deux mesures.

## EXPOSE DE L'INVENTION

L'invention vise à remédier à ce problème technique en proposant un procédé de caractérisation d'un échantillon combinant une technique de caractérisation par rayons X et une technique de caractérisation par spectrométrie de masse à ionisation secondaire et dans lequel le porte-échantillon dispose d'une surface plane permettant d'adapter l'environnement de l'échantillon afin d'obtenir une meilleure sensibilité pour chacune des deux mesures.

Pour ce faire, un premier aspect de l'invention concerne un procédé de caractérisation d'un échantillon combinant une technique de caractérisation par rayons X et une technique de caractérisation par spectrométrie de masse à ionisation secondaire, et comprenant :

- une étape de mise à disposition d'une pointe, la pointe comprenant une première surface d'extrémité, une deuxième surface d'extrémité, une première région cylindrique portant la première surface d'extrémité et une deuxième région en contact avec la première région cylindrique et s'affinant vers la deuxième surface d'extrémité ;
- une étape d'usinage de la deuxième région de sorte à obtenir un porte-échantillon comprenant une surface plane, la surface plane formant une surface d'extrémité du porte-échantillon, l'aire de ladite surface plane étant inférieure à l'aire de la première surface d'extrémité ;
- une étape de mise en place de l'échantillon sur la surface plane du porte-échantillon ;
- une première étape de caractérisation de l'échantillon à l'aide d'une technique de caractérisation par rayons X ;
- une deuxième étape de caractérisation de l'échantillon à l'aide d'une technique de caractérisation par spectrométrie de masse à ionisation secondaire.

On entend par cylindre un solide ayant une paroi latérale définie par une droite appelée génératrice, passant par un point variable décrivant une courbe, appelée courbe directrice, et gardant une direction fixe. La courbe est préférentiellement un cercle. Alternativement, la courbe peut être une ellipse ou un polygone.

On entend par étape d'usinage une étape de retrait de matière. Cet usinage peut être réalisé par polissage mécano-chimique, à l'aide d'une scie diamant ou à d'un faisceau laser. De préférence, cet usinage se fait à l'aide d'un faisceau d'ions, cette technique permettant un bon contrôle de l'usinage ainsi qu'un bon état de surface après usinage.

La surface plane obtenue lors de la mise en oeuvre du procédé de caractérisation est suffisamment petite pour ne pas perturber le rayonnement X lors de la première étape de caractérisation. En outre, la surface plane est suffisamment grande pour permettre une adaptation de l'environnement de l'échantillon afin d'améliorer la sensibilité lors de la deuxième étape de caractérisation. On pourra par exemple installer une structure de manipulation afin de disposer l'échantillon dans une cavité une fois la première étape de caractérisation effectuée. Alternativement, on pourra venir disposer une structure autour de l'échantillon afin d'augmenter la sensibilité de la deuxième étape de caractérisation. Selon une autre alternative, on pourra aménager une cavité au niveau de la surface plane afin d'y disposer l'échantillon. De manière alternative, on pourra disposer un substrat, ce dernier comprenant l'échantillon à analyser entouré de structures discrètes, sur la surface plane du porte-échantillon, les structures discrètes étant agencées de sorte à améliorer la sensibilité de la deuxième étape de caractérisation.

Ce procédé est en outre facile à mettre en oeuvre car les pointes utilisées pour fabriquer le porte-échantillon sont les pointes habituellement utilisées dans les procédés de caractérisation par rayons X.

Le procédé de caractérisation peut également présenter une ou plusieurs des caractéristiques ci-après prises indépendamment ou selon toutes les combinaisons techniquement possibles.

Avantageusement, l'étape de mise en place de l'échantillon comprend :

- une étape d'usinage d'une première structure de fixation sur la surface plane du porte-échantillon ;
- une étape de mise en place de l'échantillon sur la surface plane du porte-échantillon, au niveau de la première structure de fixation ;
- une étape de soudure de l'échantillon sur la surface plane du porte-échantillon, au niveau de la première structure de fixation.

Avantageusement, l'étape de mise en place de l'échantillon comprend également une étape d'affinage de l'échantillon, l'affinage de l'échantillon se faisant par usinage.

Ainsi, la bonne fixation de l'échantillon est assurée et ce dernier n'est plus susceptible de bouger lors de l'étape d'affinage de l'échantillon ou lors des première et deuxième étapes de caractérisation. L'étape d'affinage permet en outre de retirer les éventuels résidus de colle présents sur l'échantillon et de compenser, en usinant l'échantillon, une éventuelle inclinaison dudit l'échantillon relativement à la surface plane du porte-échantillon.

Avantageusement, le procédé comprend, après la première étape de caractérisation et avant la deuxième étape de caractérisation :

- une étape d'usinage, dans un premier substrat distinct du porte-échantillon, d'une cavité, dite cavité de mesure ;
- une étape d'usinage d'une deuxième structure de fixation, proche de la première structure de fixation, sur la surface plane du porte-échantillon ;
- une étape de mise en place d'une structure de manipulation sur la surface plane du porte-échantillon au niveau de la deuxième structure de fixation ;
- une étape de soudure de la structure de manipulation sur la surface plane du porte-échantillon, au niveau de la deuxième structure de fixation ;
- une étape d'usinage d'une partie de la surface plane du porte-échantillon de sorte à libérer une région comprenant les première et deuxième structures de fixation et ainsi former un deuxième porte-échantillon ;
- une étape de mise en place du deuxième porte-échantillon, à l'aide de la structure de manipulation, dans la cavité de mesure aménagée sur le premier substrat.

L'échantillon peut donc être déplacé à l'aide de la structure de manipulation, c'est-à-dire sans être manipulé directement, et ainsi voir son environnement modifié entre les deux mesures. Lors de la première étape de caractérisation, l'échantillon se trouve sur la surface plane du porte-échantillon et l'absorption du rayonnement X est alors minimale. En revanche, lors de la deuxième étape de caractérisation, l'échantillon se trouve dans une cavité, ce qui augmente la sensibilité de mesure du fait d'une meilleure extraction des ions secondaires, la cavité agissant comme une loupe en réorientant les ions secondaires vers l'extracteur.

De manière alternative, le procédé comprend, après la première étape de caractérisation et avant la deuxième étape de caractérisation :

- une étape d'usinage, dans un deuxième substrat distinct du porte-échantillon, d'un premier orifice ;
- une étape d'usinage, autour du premier orifice, d'une structure de dimensions sensiblement égales à celles de la surface plane du porte-échantillon, de sorte à obtenir un premier élément percé d'un orifice ;
- une étape de mise en place du premier élément percé d'un orifice sur la surface plane du porte-échantillon de sorte que l'échantillon se situe dans l'orifice dudit premier élément ;
- une étape de soudure du premier élément percé d'un orifice à la surface plane du porte-échantillon ;

l'orifice venant réaliser une cavité de mesure autour de l'échantillon.

Ainsi, lors de la première étape de caractérisation, l'échantillon se trouve sur la surface plane du porte-échantillon et l'absorption du rayonnement X est alors minimale. En revanche, lors de la deuxième étape de caractérisation, l'échantillon se trouve dans l'orifice du premier élément qui agit comme une cavité.

De manière alternative, le procédé comprend, après la première étape de caractérisation et avant la deuxième étape de caractérisation, une étape de dépôt assisté par faisceau de particules chargées d'une structure entourant l'échantillon, la structure venant réaliser une cavité de mesure autour de l'échantillon.

Ainsi, lors de la première étape de caractérisation, l'échantillon se trouve sur la surface plane du porte-échantillon et l'absorption du rayonnement X est alors faible. En revanche, lors de la deuxième étape de caractérisation, l'échantillon se trouve dans la structure entourant l'échantillon qui agit comme une cavité.

Avantageusement, la structure déposée est de forme cylindrique. Ce mode de réalisation est particulièrement adapté lorsque l'échantillon présente la forme d'un cylindre car dans ce cas, les parois de la structure sont à égale distance de l'échantillon en tout point, ce qui améliore l'extraction des ions secondaires lors de la deuxième étape de caractérisation. Alternativement, la structure déposée est demi-cylindrique.

De manière alternative, le porte-échantillon est transparent aux rayons X et le procédé comprend en outre, après l'étape d'usinage de la surface plane et avant l'étape de mise en place de l'échantillon, une étape d'usinage d'une cavité ; l'échantillon étant disposé dans cette cavité lors l'étape de mise en place, de sorte que la cavité forme une cavité de mesure autour de l'échantillon.

Ainsi, lors de la première étape de caractérisation, la faible épaisseur et le choix du matériau composant le porte-échantillon sont tels que l'absorption du rayonnement X demeure très faible. De plus, lors de la deuxième étape de caractérisation, l'échantillon se trouve toujours dans la cavité ce qui, comme décrit précédemment, augmente la sensibilité de mesure du fait d'une meilleure extraction des ions secondaires, la cavité agissant comme une loupe. Avantageusement, lorsque l'échantillon est soudé au porte-échantillon à l'aide de la première structure de fixation, la première structure de fixation est située au fond de la cavité de mesure.

Avantageusement, la distance $d_{s-c}$ entre l'échantillon et les parois de la cavité de mesure sont donnée par :

$$d_{s-c} = h_s.\tan(\alpha)$$

où $h_s$ est la hauteur de l'échantillon, tan est la fonction tangente et $\alpha$ est l'angle d'incidence du faisceau d'ions relativement à la normale de la surface du porte-échantillon.

Cette distance permet de réduire l'effet d'ombrage induit par les parois de la cavité de mesure lors de la deuxième étape de caractérisation tout en maintenant l'effet d'orientation des ions secondaires par l'intermédiaire de la cavité de mesure.

De manière alternative, l'étape de mise en place de l'échantillon comprend :

- une étape de mise à disposition d'un troisième substrat distinct du porte-échantillon ;
- une étape de mise en place de l'échantillon sur le troisième substrat ;
- la réalisation, autour de l'échantillon, de structures discrètes, la hauteur des structures étant égale à la hauteur de l'échantillon ;
- une étape de mise en place du troisième substrat sur la surface plane du porte-échantillon ;
- une étape de soudure du troisième substrat sur la surface plane du porte-échantillon ;

les dimensions du troisième substrat étant choisies de sorte que la totalité du troisième substrat repose sur la surface plane du porte-échantillon.

Avantageusement, la distance $d_{s-c}$ séparant la structure discrète la plus proche de l'échantillon de l'échantillon lui-même est donnée par :

$$d_{s-c} = h_s.\tan(\alpha)$$

où $h_s$ est la hauteur de l'échantillon, tan est la fonction tangente et $\alpha$ est l'angle d'incidence du faisceau d'ions relativement à la normale de la surface du porte-échantillon.

**BREVE DESCRIPTION DES FIGURES**

D'autres caractéristiques et avantages de l'invention ressortiront à la lecture de la description détaillée qui suit, en référence aux figures annexées, qui illustrent :

- la figure 1, un principe de fonctionnement d'une méthode de caractérisation par rayons X ;
- la figure 2, un principe de fonctionnement d'une méthode de caractérisation par spectrométrie de masse à ionisation secondaire ;
- les figures 3, 4 et 5, un premier mode de réalisation de l'invention ;
- la figure 6, la préparation de l'échantillon ;
- les figures 7, 8 et 9, un deuxième mode de réalisation de l'invention ;
- les figures 10, 11 et 12, un troisième mode de réalisation de l'invention ;
- les figures 13 et 14, un quatrième mode de réalisation de l'invention ;
- les figures 15 et 16, un cinquième mode de réalisation de l'invention ;
- les figures 17 et 18, un sixième mode de réalisation de l'invention ;
- la figure 19, le phénomène d'ombrage ;
- les figures 20 et 21, un septième mode de réalisation de l'invention.

Pour plus de clarté, les éléments identiques ou similaires sont repérés par des signes de références identiques sur l'ensemble des figures.

**DESCRIPTION DETAILLEE D'AU MOINS UN MODE DE REALISATION**

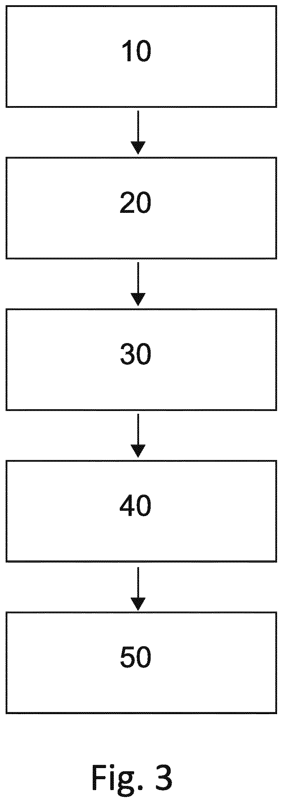

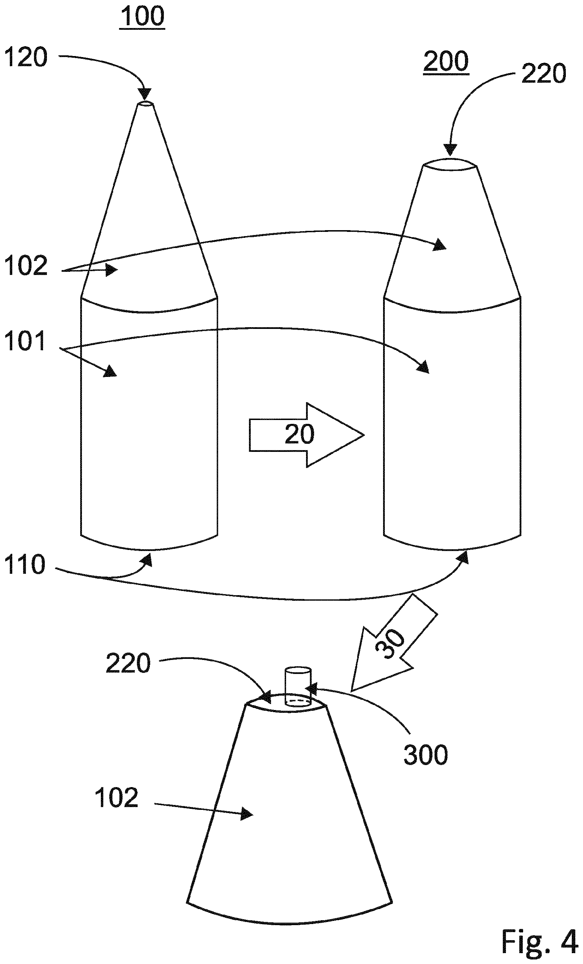

Dans un premier mode de réalisation illustré sur les figures 3 et 4, le procédé de caractérisation d'un échantillon (300) combinant une technique de caractérisation par rayons X telle qu'une technique de tomographie par rayons X et une technique de caractérisation par spectrométrie de masse à ionisation secondaire telle qu'une une technique de spectrométrie de masse à ionisation secondaire à temps de vol comprend une étape de mise à disposition (10) d'une pointe (100), la pointe (100) comprenant une première surface d'extrémité (110), une deuxième surface d'extrémité (120), une première région cylindrique (101) portant la première surface d'extrémité (110) et une deuxième région (102) en contact avec la première région cylindrique (101) et s'affinant vers la deuxième surface d'extrémité (120).

Le procédé comprend également une étape d'usinage (20) de la deuxième région (102) de sorte à obtenir un porte-échantillon (200) comprenant une surface plane (220), la surface plane (220) formant une surface d'extrémité du porte-échantillon (200), l'aire de ladite surface plane (220) étant inférieure à l'aire de la première surface extrémité (110) ; une étape de mise en place (30) de l'échantillon (300) sur la surface plane (220) du porte-échantillon (200) ; une première étape de caractérisation (40) de l'échantillon (300) à l'aide d'une technique de caractérisation par rayons X ; une deuxième étape de caractérisation (50) de l'échantillon (300) à l'aide d'une technique de caractérisation par spectrométrie de masse à ionisation secondaire.

La pointe utilisée (100) pour fabriquer le porte-échantillon (200) peut être fabriquée par un procédé connu de l'homme du métier ou achetée dans le commerce.

De préférence, le diamètre de la pointe (100) au niveau de la deuxième surface d'extrémité (120) est compris entre 50 et 100 $\mu$m, voire sensiblement égal à 80 $\mu$m. De préférence, son diamètre est choisi de sorte que, après usinage, la partie plane (220) du porte-échantillon (200) a un diamètre compris entre 100 et 1000 $\mu$m. L'utilisation d'une surface plane (220) de petite taille permet de limiter le phénomène d'absorption lors de la première étape de caractérisation (40), qui consiste en une caractérisation par rayons X. En outre, la surface plane (220) obtenue est suffisamment grande pour permettre un aménagement de l'environnement de l'échantillon (300) de façon à rendre la deuxième étape de caractérisation (50), qui consiste en une caractérisation par spectrométrie de masse à ionisation secondaire, plus sensible. Cette adaptation de l'environnement peut avoir lieu entre la première étape de caractérisation (40) et la deuxième étape de caractérisation (50) mais aussi avant la première étape de caractérisation, à condition de limiter l'absorption des rayons X.

Comme présenté dans la suite, on pourra par exemple installer une structure de manipulation afin de disposer l'échantillon dans une cavité une fois la première étape de caractérisation effectuée. Alternativement, on pourra venir disposer une structure autour de l'échantillon afin d'augmenter la sensibilité de la deuxième étape de caractérisation. Selon une autre alternative, on pourra aménager une cavité au niveau de la surface plane afin d'y disposer l'échantillon. De manière alternative, on pourra disposer un substrat, ce dernier comprenant l'échantillon à analyser entouré de structures discrètes, sur la surface plane du porte-échantillon, les structures discrètes étant agencées de sorte à améliorer la sensibilité de la deuxième étape de caractérisation.

Afin d'obtenir la planéité souhaitée, l'usinage est effectué selon un angle normal à la région cylindrique (101). Il peut être effectué par polissage mécano-chimique, à l'aide d'une scie diamant ou par une technique laser par exemple. De préférence, l'usinage est effectué à l'aide d'un faisceau d'ions, cette technique permettant un contrôle plus fin de l'angle de découpe, avec une précision de l'ordre de 0.5°.

La première étape de caractérisation par rayons X peut consister en une étape de caractérisation par tomographie à rayons X. La deuxième étape de caractérisation (50), qui consiste en une caractérisation par spectrométrie de masse à ionisation secondaire, est une technique de caractérisation destructive et doit donc intervenir en dernier dans le procédé de caractérisation objet de l'invention. La technique de détection des ions secondaires est préférentiellement une technique de détection par mesure du temps de vol.

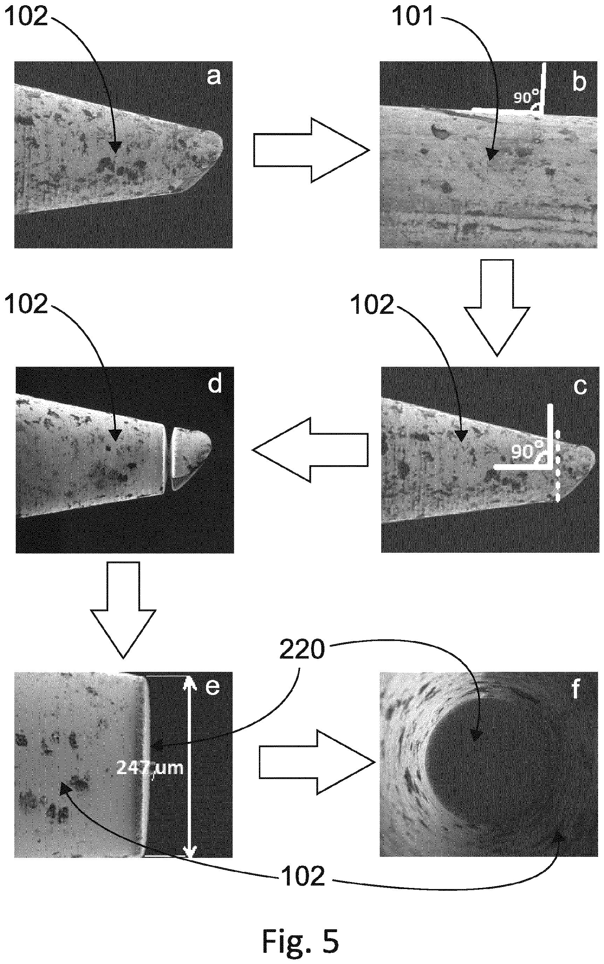

Dans un exemple illustré sur la figure 5, afin d'obtenir le porte-échantillon (200), on dispose tout d'abord d'une pointe (figure 5a). On mesure ensuite la normale à la première région cylindrique (101) de la pointe (figure 5b) et on reporte l'angle obtenu sur la deuxième région (102) de la pointe (figure 5c). On effectue ensuite un usinage à l'aide d'un faisceau d'ions (figure 5d) afin d'obtenir une surface plane (figures 5e et 5f). Dans le mode de réalisation illustré dans la figure 5e, le diamètre de la partie plane est sensiblement égal à $250\mu m$.

L'échantillon (300) peut être obtenu par une technique classique de préparation d'un échantillon. L'échantillon peut par exemple être de forme carrée avec une largeur comprise entre $35\mu m$ et $100\mu m$, voire sensiblement égale à $60\mu m$. De manière alternative, l'échantillon peut être de forme cylindrique et son diamètre compris entre $35\mu m$ et $100\mu m$, par exemple sensiblement égal à $60\mu m$. L'échantillon peut avoir une hauteur comprise entre 50 et $100\mu m$, par exemple sensiblement égale à $70\mu m$.

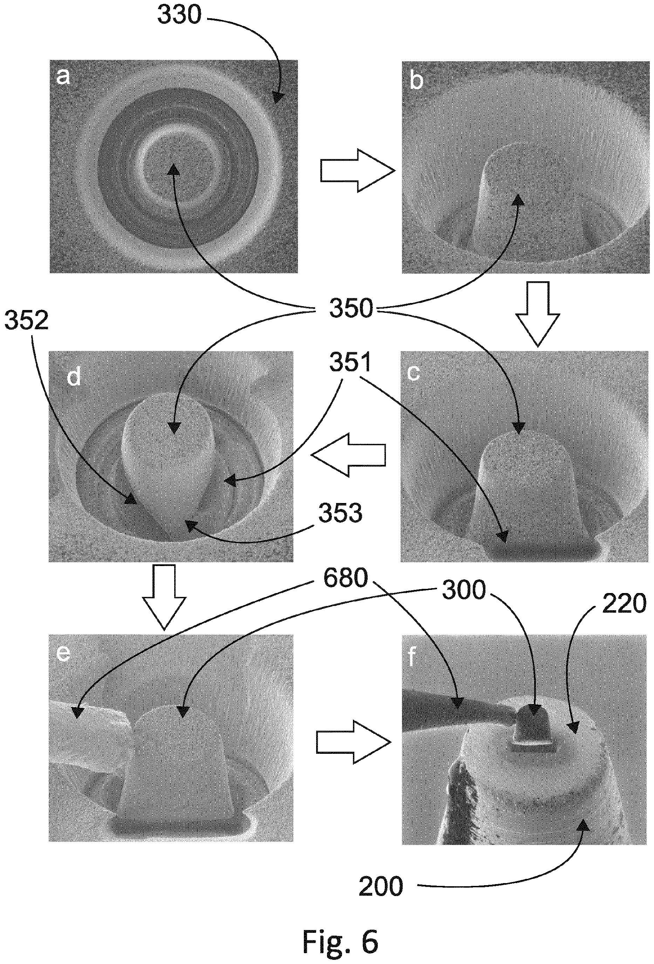

L'échantillon peut être usiné à l'aide d'une technique de faisceau d'ions. Dans un mode de réalisation illustré dans la figure 6, lors d'une première étape (figures 6a et 6b), un premier cylindre (350) est défini dans un substrat (330) composé du matériau à analyser. Dans une deuxième étape (figure 6c), le faisceau d'ions est incliné afin d'opérer une découpe (351) dans une première partie du cylindre (350). L'angle d'inclinaison du faisceau est de préférence sensiblement égal à 45° relativement à la surface du substrat. Puis une deuxième découpe (352) est effectuée (figure 6d) de manière opposée à la première découpe (351), selon un angle identique à la première découpe, ne laissant qu'un point d'ancrage (353) entre le cylindre et le reste du substrat. La présence de ce point d'ancrage évite que le premier cylindre (350) ne tombe lors de la découpe complète de la structure. Ensuite, un micromanipulateur (680) est accroché (figure 6e) au cylindre (350) puis une dernière découpe est effectuée selon un angle identique à la première découpe afin de venir libérer le cylindre du reste du substrat de sorte à définir un échantillon (300). Le micromanipulateur peut être accroché par une technique de soudure. On peut par exemple utiliser une technique de dépôt assisté par faisceau de particules chargées. Le matériau utilisé peut par exemple être du platine. Dans une dernière étape (figure 6f), l'échantillon est déposé sur la surface plane (220) du porte-échantillon (200). Le micromanipulateur est ensuite détaché de l'échantillon afin de pouvoir procéder aux étapes de caractérisation.

Le détachement de l'échantillon peut être obtenu par une technique d'usinage à faisceau d'ions.

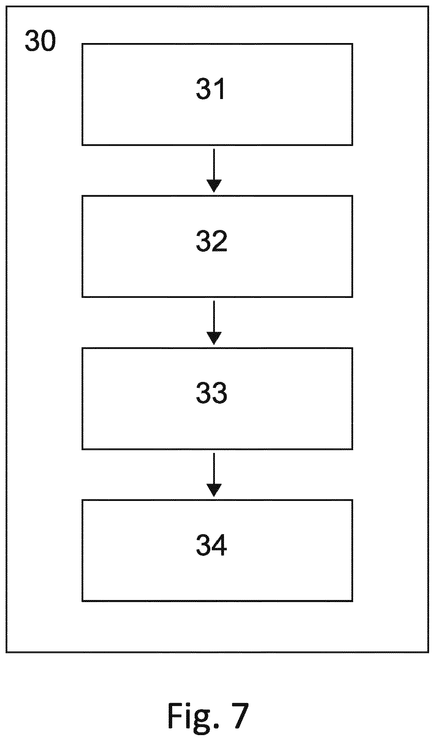

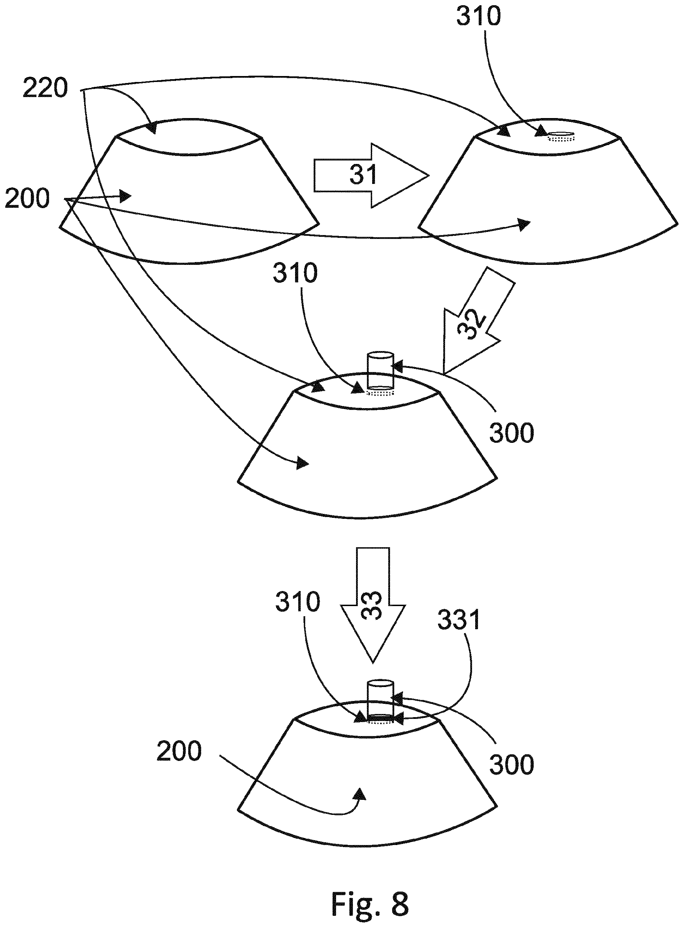

Dans un deuxième mode de réalisation illustré sur les figures 7 et 8, l'étape de mise en place (30) de l'échantillon (300) comprend une étape d'usinage (31) d'une première structure de fixation (310) sur la surface plane (220) du porte-échantillon (200) ; une étape de mise en place (32) de l'échantillon (300) sur la surface plane (220) du porte-échantillon (200) et ; une étape de soudure (33) de l'échantillon (300) sur la surface plane (220) du porte-échantillon (200), au niveau de la première structure de fixation (310).

Dans un mode de réalisation, l'étape de mise en place (30) de l'échantillon (300) comprend également une étape d'affinage (34) de l'échantillon (300), l'affinage de l'échantillon (300) se faisant par usinage.

Ainsi, l'échantillon (300) est solidaire du porte-échantillon (200) et n'est pas susceptible de bouger durant les étapes de caractérisation mais surtout durant l'étape d'affinage (34). L'étape d'affinage (34) permet en outre de retirer les éventuels résidus de colle présents sur l'échantillon (300) et de compenser, en usinant l'échantillon (300), une éventuelle inclinaison dudit l'échantillon (300) relativement à la surface plane (220) du porte-échantillon (200).

La première structure de fixation (310) peut prendre la forme d'une tranchée ou d'une cavité à la surface de la partie plane (220) dans laquelle va venir s'insérer une partie de l'échantillon (300) à analyser. La géométrie de cette structure est fixée par la géométrie de l'échantillon (300) à analyser.

L'étape de soudure (33) de l'échantillon (300) à la première structure de fixation (310) peut être effectuée par l'intermédiaire d'un dépôt (331) assisté par faisceau de particules chargées. La soudure peut par exemple être réalisée avec du platine.

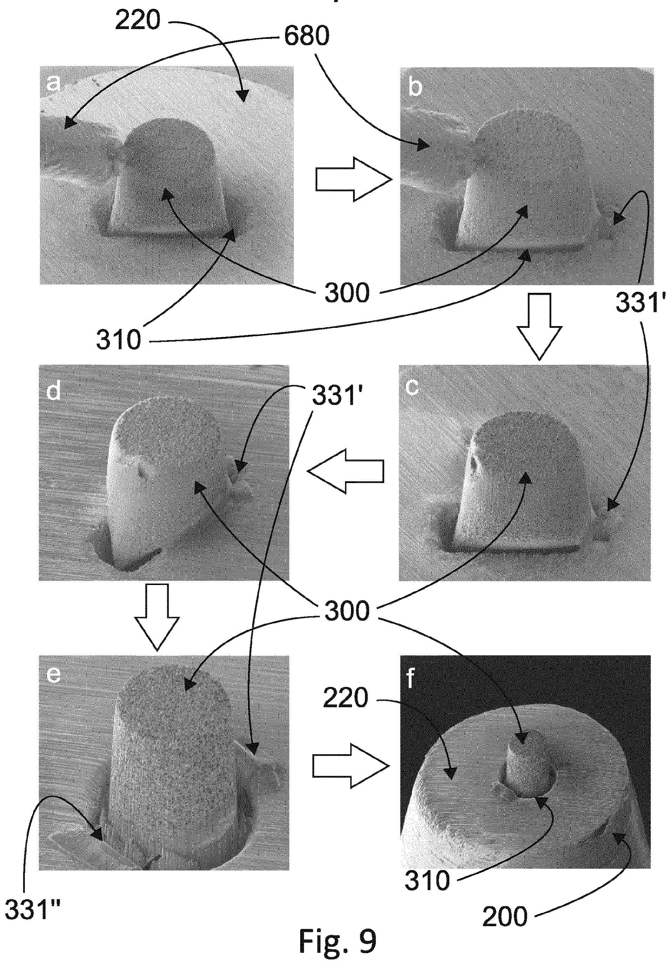

La mise en place (30) de l'échantillon (300) peut se faire à l'aide d'un micromanipulateur (680) comme illustré dans la figure 9. Dans un mode de réalisation, une première étape (figure 9a) consiste à placer la base de l'échantillon (300) dans la première structure de fixation (310). Le micromanipulateur (680) peut être attaché à l'échantillon (300) par une technique de soudure. Une fois l'échantillon (300) en place, un premier point de soudure (331') est réalisé (figure 9b) à la jonction entre l'échantillon (300) et la première structure de fixation (310). Cette soudure (331') peut par exemple être réalisée lors d'une étape de dépôt assisté par faisceau de particules chargées. Une fois l'échantillon (300) solidaire de la surface plane (220) du porte-échantillon (200), le micromanipulateur (680) peut être détaché (figure 9c) de l'échantillon (300) sans qu'il y ait un risque pour l'échantillon (300) de tomber. Le premier point de soudure (331') peut ensuite être renforcé en procédant à un nouveau dépôt de matériau (figure 9d). Un deuxième point de soudure (331") est réalisé à la jonction entre l'échantillon (300) et la première structure de fixation (310) afin de renforcer la fixation (figure 9e). L'échantillon (300) se trouve ainsi solidaire (figure 9f) de la première structure de fixation (310) et donc du porte-échantillon (200).

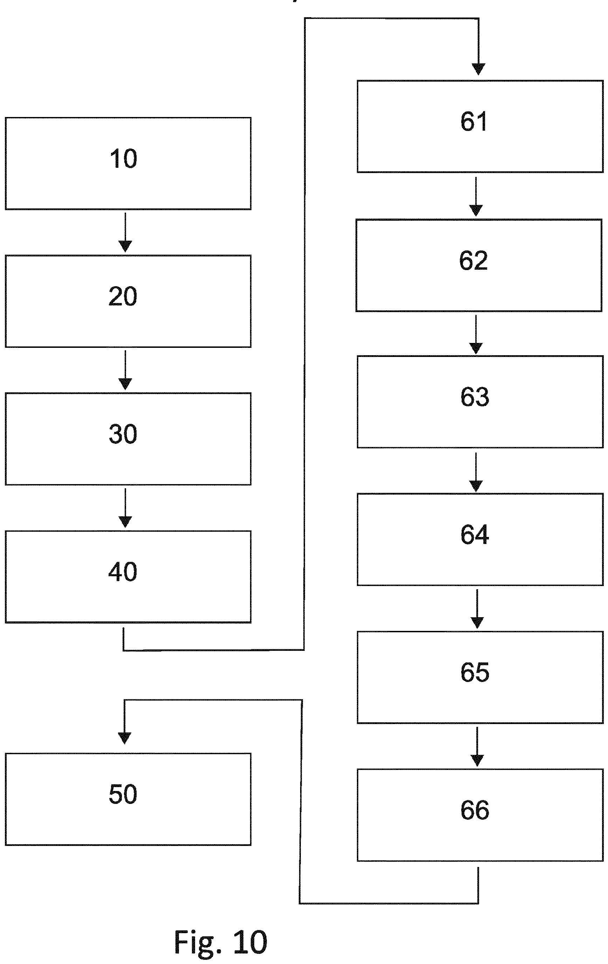

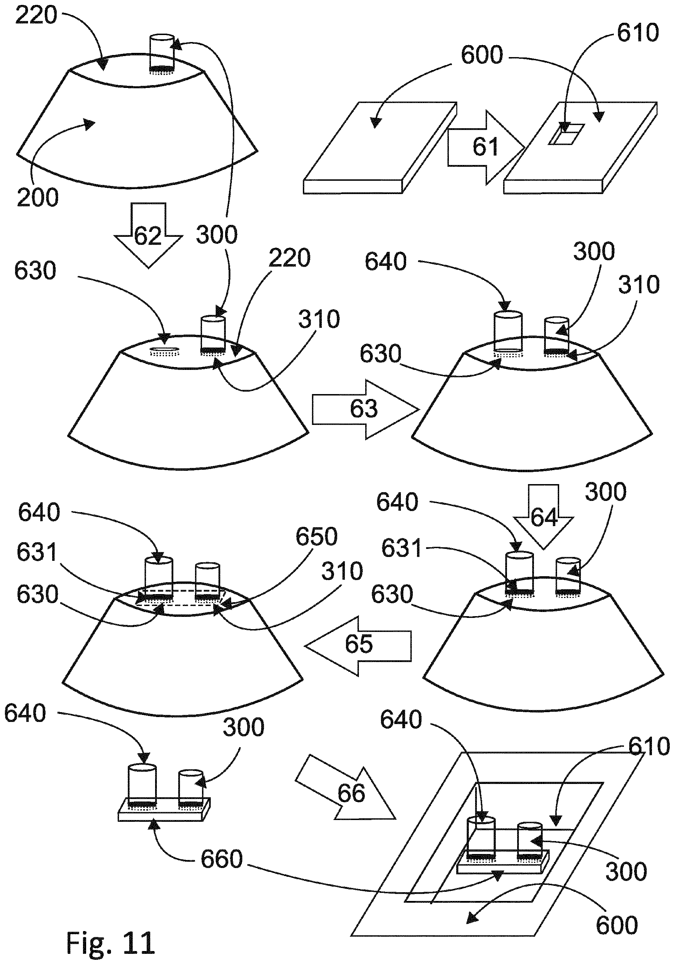

Dans un troisième mode de réalisation illustré sur les figures 10 et 11, le procédé comprend, après la première étape de caractérisation (40) et avant la deuxième étape de caractérisation (50), une étape d'usinage (61), dans un premier substrat (600) distinct du porte-échantillon, d'une cavité (610), dite cavité de mesure ; une étape d'usinage (62) d'une deuxième structure de fixation (630), proche de la première structure de fixation (310), sur la surface plane (220) du porte-échantillon (200) ; une étape de mise en place (63) d'une structure de manipulation (640) sur la surface plane (220) du porte-échantillon (200) au niveau de la deuxième structure de fixation (630) ; une étape de soudure (64) de la structure de manipulation (640) sur la surface plane (220) du porte-échantillon (200), au niveau de la deuxième structure de fixation (630) ; une étape d'usinage (65) d'une partie de la surface plane (220) du porte-échantillon (200) de sorte à libérer une région (650) comprenant les première (310) et deuxième structures (630) de fixation et ainsi former un deuxième porte-échantillon (660) et ; une étape de mise en place (66) du deuxième porte-échantillon (660), à l'aide de la structure de manipulation (640), dans la cavité (610) aménagée sur le premier substrat (600).

L'installation de la structure de manipulation (640) est rendue possible par la forme particulière du porte-échantillon (200) et en particulier par la surface plane (220) réalisée à l'étape d'usinage (20) de la pointe (100). Cette structure de manipulation (640) permet de manipuler l'échantillon (300) sans le toucher directement ce qui évite que ce dernier ne s'abîme entre la première étape de caractérisation (40) et la deuxième étape de caractérisation (50).

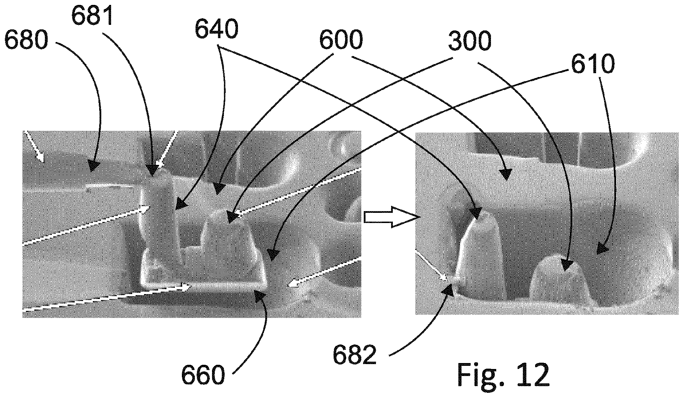

L'étape de mise en place du deuxième porte-échantillon dans la cavité peut se faire à l'aide d'un micromanipulateur (680) comme illustré dans la figure 12. Dans un premier temps, le micromanipulateur (680) est accroché par soudure (681) à la structure de manipulation (640). La structure de manipulation (640) étant solidaire du deuxième porte-échantillon (660), ce dernier peut être extrait du porte-échantillon (200) afin d'être disposé dans la cavité (610) réalisée dans le premier substrat (600). La profondeur de la cavité (610) du premier substrat (600) est donc fixée par la hauteur de la structure de manipulation (640). En effet, si la cavité (610) est trop profonde, le micromanipulateur (682) va entrer en contact avec le premier substrat (600) avant que le deuxième porte-échantillon (660) n'ait touché le fond de la cavité (610) et le deuxième porte-échantillon (660) ne pourra pas être mis en place correctement dans cette cavité (610). De préférence, la profondeur de la cavité (610) n'excède pas la hauteur de la structure de manipulation (640). Il est cependant possible de créer une tranchée afin d'aménager un passage pour le micromanipulateur dans le substrat (600). De préférence, une fois en place dans la cavité (610), une soudure (682) est réalisée entre le substrat (600) et la structure de manipulation (640) afin de solidariser le deuxième porte-échantillon (660) au substrat (600).

De préférence, le premier substrat (600) est constitué d'un matériau conducteur ce qui évite le phénomène de charge lors de la deuxième étape (50) de caractérisation. De manière alternative, le premier substrat (600) est constitué d'un matériau isolant et une étape de dépôt d'une couche conductrice est effectuée avant la mise en place (66) du deuxième porte-échantillon (660) dans la cavité (610). De préférence, le premier substrat (600) est un substrat de silicium.

La cavité (610) réalisée dans le premier substrat (600) peut être obtenue par une technique d'usinage par faisceau d'ions. Dans un mode de réalisation, la cavité (610) usinée dans le premier substrat (600) est de forme rectangle. Sa longueur peut être comprise entre 150 et 450µm, de préférence sensiblement égale 350µm. De préférence, la largeur de la cavité (610) est comprise entre 150 et 350µm, de préférence sensiblement égale à 250µm.

La deuxième structure de fixation (630) peut adopter une forme similaire à la première structure de fixation (310), c'est-à-dire prendre la forme d'une tranchée ou d'une cavité. L'étape de soudure de la structure de manipulation (640) à la structure de fixation (630) peut se faire par l'intermédiaire d'un dépôt (631) assisté par faisceau de particules chargées.

La structure de manipulation (640) peut prendre la forme d'un cylindre et être obtenue à l'aide d'une technique similaire à la technique utilisée pour fabriquer l'échantillon (300). De préférence, la structure de manipulation est en silicium.

Avantageusement, la hauteur de la structure de manipulation (640) est sensiblement égale ou supérieure à la hauteur de l'échantillon (300). La hauteur de la structure de manipulation (640) peut par exemple être comprise entre 150 et 250 µm, voire sensiblement égale à 180µm. Le diamètre de la structure de manipulation (640) est alors sensiblement égal à 50µm et la distance entre la structure de manipulation (640) et l'échantillon (300) comprise entre 20 et 70µm, voire sensiblement égale à 50µm.

Dans un mode de réalisation, le deuxième porte-échantillon (660) est de forme rectangle. De préférence, la largeur du deuxième porte-échantillon (660) est comprise entre 50 et 100µm, de préférence sensiblement égale à 75µm et la longueur du porte-échantillon est comprise entre 100 et 300µm, de préférence sensiblement égale à 200µm. De préférence, la structure de manipulation (640) et l'échantillon (300) sont alignés dans le sens de la longueur du deuxième porte-échantillon (660).

Une fois le deuxième porte-échantillon (660) en place dans la cavité (610), il est préférable que le sens de la longueur du deuxième porte-échantillon (660) soit parallèle au sens de la longueur de la cavité (610).

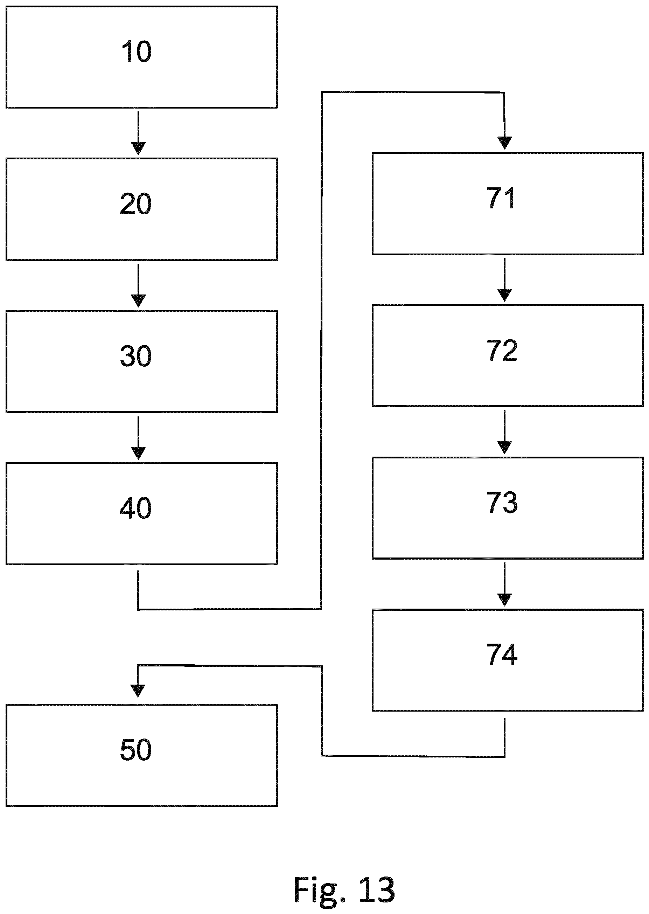

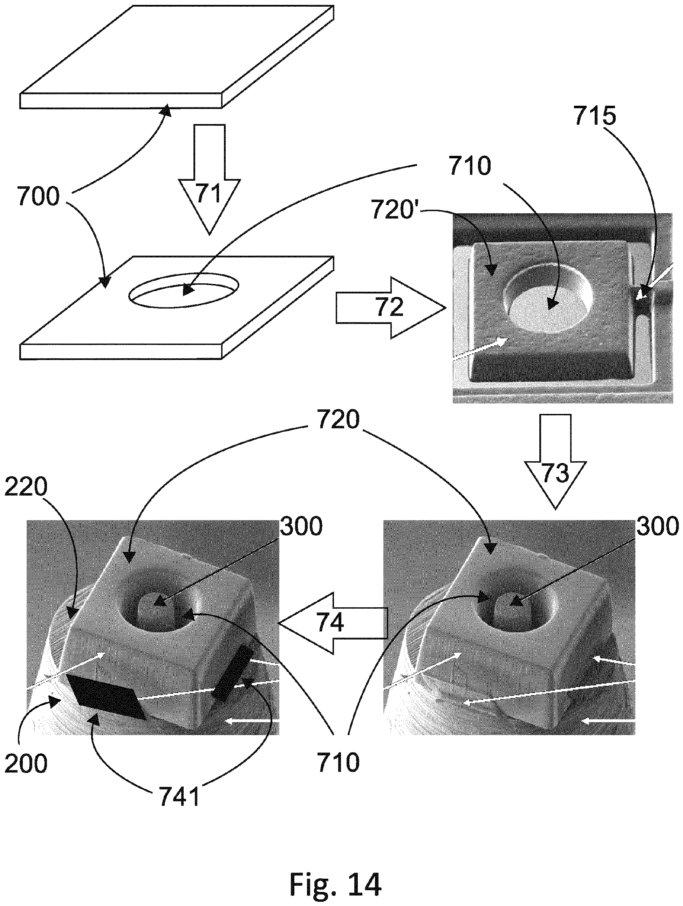

Dans un quatrième mode de réalisation illustré sur les figures 13 et 14, le procédé selon l'invention comprend, après la première étape de caractérisation (40) et avant la deuxième étape de caractérisation (50), une étape d'usinage (71), dans un deuxième substrat (700) distinct du porte-échantillon (200), d'un premier orifice (710) ; une étape d'usinage (72), autour du premier orifice, d'une première structure (720') et de dimension sensiblement égale à la surface plane (220) du porte-échantillon (200), de sorte à obtenir un premier élément (720) percé d'un orifice (710) ; une étape de mise en place (73) du premier l'élément (720) percé d'un orifice (710) sur la surface plane (220) du porte-échantillon (200) de sorte que l'échantillon (300) se situe dans l'orifice (710) dudit premier élément (720) ; une étape de soudure (74) du premier élément (720) percée d'un orifice (710) à la surface plane (220) du porte-échantillon (200). Ainsi, le premier élément (720) percé d'un orifice (710) vient réaliser une cavité de mesure autour de l'échantillon (300).

Dans ce mode de réalisation, il est alors préférable de choisir un échantillon (300) de forme cylindrique, la symétrie ainsi obtenue permettant un meilleur confinement des lignes de champs et donc un plus grand rendement dans la récupération des ions secondaire lors de la deuxième étape de caractérisation (50).

De préférence, l'usinage de l'orifice (710) se fait selon une direction normale à la surface du deuxième substrat (700). Dans un mode de réalisation, le diamètre de l'orifice (710) est compris entre 90 et $100\mu m$. Dans ce cas, on pourra par exemple choisir un diamètre de l'échantillon (300) compris entre 35 et $45\mu m$.

De préférence, lors de l'étape d'usinage (72) de la structure (720'), il est laissé un pont de maintien (715). Ce pont de maintien (715) permet à la structure (720') de ne pas se détacher du substrat (700). Un micromanipulateur est ensuite attaché à la structure (720') par soudage. Une fois que le micromanipulateur est solidaire de la structure (720'), le pont de maintien (715) est éliminé. Le micromanipulateur permet ensuite de venir disposer le premier élément (720) percé de son orifice (710) ainsi obtenu autour de l'échantillon (300). Le premier élément (720) peut avoir une forme quelconque. De préférence, comme illustré dans la figure 14, le premier élément (720) est de forme carrée.

De préférence, l'épaisseur du deuxième substrat (700) est sensiblement égale à la hauteur de l'échantillon (300). Dans un mode de réalisation, l'épaisseur du deuxième substrat (700) est comprise entre 50 et $100\mu m$ et le premier élément (720) peut adopter une forme carrée dont la largeur est sensiblement égale à $180\mu m$.

Le matériau du substrat (700) peut être isolant ou conducteur. Dans le cas d'un substrat (700) isolant, on pourra avoir recours à un dépôt de matériau métallique afin d'éviter un phénomène de charge lors de la deuxième étape de caractérisation (50). De préférence, le deuxième substrat (700) est en silicium.

De préférence, lors de l'étape de mise en place du premier élément (720) autour de l'échantillon (300), on procède à une observation en se plaçant au-dessus de l'échantillon (300) de sorte à pouvoir aligner facilement l'orifice (710) du premier élément (720) avec l'échantillon (300) à analyser et ainsi s'assurer du bon placement de l'échantillon (300) dans l'orifice (710).

De préférence, l'étape de soudure (74) du premier élément (720) à la surface plane (220) du porte-échantillon (200) peut se faire par l'intermédiaire d'un dépôt (741) assisté par faisceau de particules chargées. Le matériau déposé est par exemple du platine.

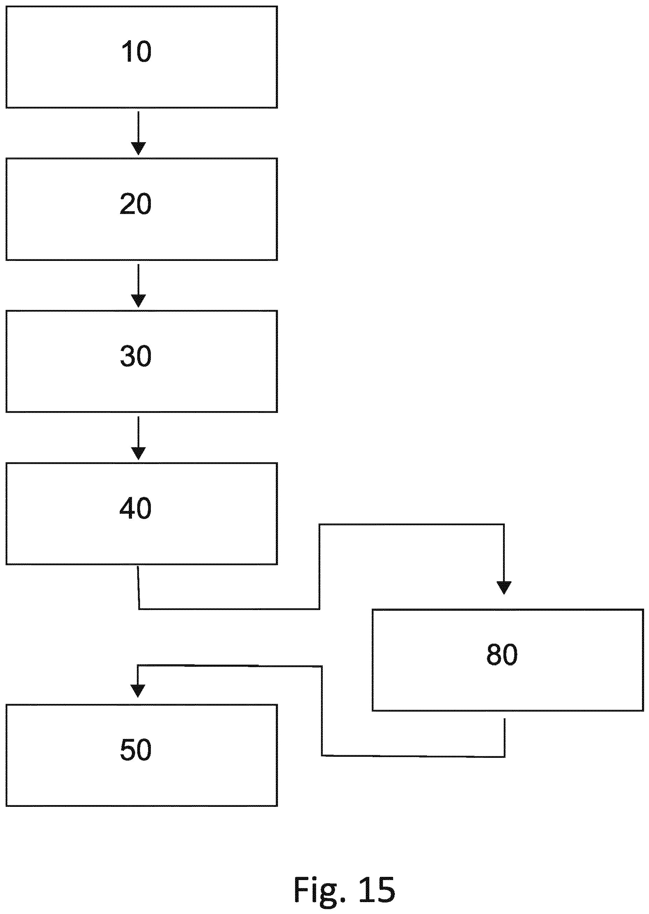

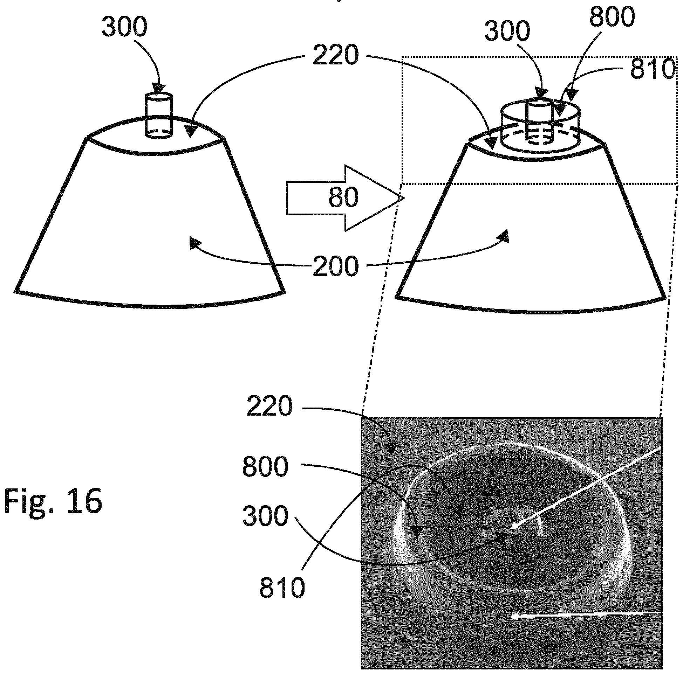

Dans un cinquième mode de réalisation illustré sur les figures 15 et 16, le procédé comprend après la première étape de caractérisation (40) et avant la deuxième étape de caractérisation (50), une étape de dépôt (80) assisté par faisceau de particules chargées d'une structure (800) entourant l'échantillon (300), la structure (800) venant réaliser une cavité (810) autour de l'échantillon (300) jouant le rôle de cavité de mesure.

De manière alternative, l'étape de dépôt (80) est réalisée avant la première étape de caractérisation (40). Dans ce cas, le matériau déposé pour former la structure (800) est transparent aux rayons X. Dans ce mode de réalisation, il est préférable de choisir une épaisseur des parois de la structure suffisamment large pour éviter un effondrement de ces dernières mais suffisamment étroite pour ne pas atténuer de manière trop importante le rayonnement X. Il faut donc prendre en compte le coefficient d'absorption du matériau utilisé pour réaliser la structure.

Dans l'exemple de réalisation illustré en figure 16, la largeur de la structure est sensiblement égale à $340\mu m$, la hauteur de la structure est sensiblement égale à $110\mu m$ et l'épaisseur des parois de la structure est sensiblement égale à $35\mu m$, la structure étant réalisée par un dépôt de SiO2 à partir d'un précurseur de III/HMCHS (2,4,6,8,10,12-hexamethylcyclohexasiloxane). De manière générale tout matériau à faible nombre atomique, et donc absorbant faiblement les rayons X, peut être utilisé.

De préférence, la structure (800) et l'échantillon (300) ont une forme cylindrique. La forme cylindrique présente l'avantage de produire un meilleur confinement des lignes de champs électrostatiques, et donc une plus grande capacité de récupération des ions secondaires émis lors de la deuxième étape de caractérisation.

Alternativement, la structure (800) peut avoir la forme d'un demi-cylindre, le centre du demi-cylindre étant confondu avec le centre de l'échantillon (300). Ce mode de réalisation est particulièrement adapté lorsque le dépôt de la structure a lieu avant la première étape de caractérisation (40). En effet, du fait de la forme demi-cylindrique, l'absorption des rayons X est plus limitée, une seule paroi se trouvant sur le trajet du rayonnement X lors de la première étape de caractérisation (40). Dans le mode de réalisation correspondant à une structure demi-cylindrique, la hauteur des parois de la structure (800) est choisie sensiblement égale à la hauteur de l'échantillon (300) voire légèrement plus élevée, par exemple plus élevée de 10%, que la hauteur de l'échantillon.

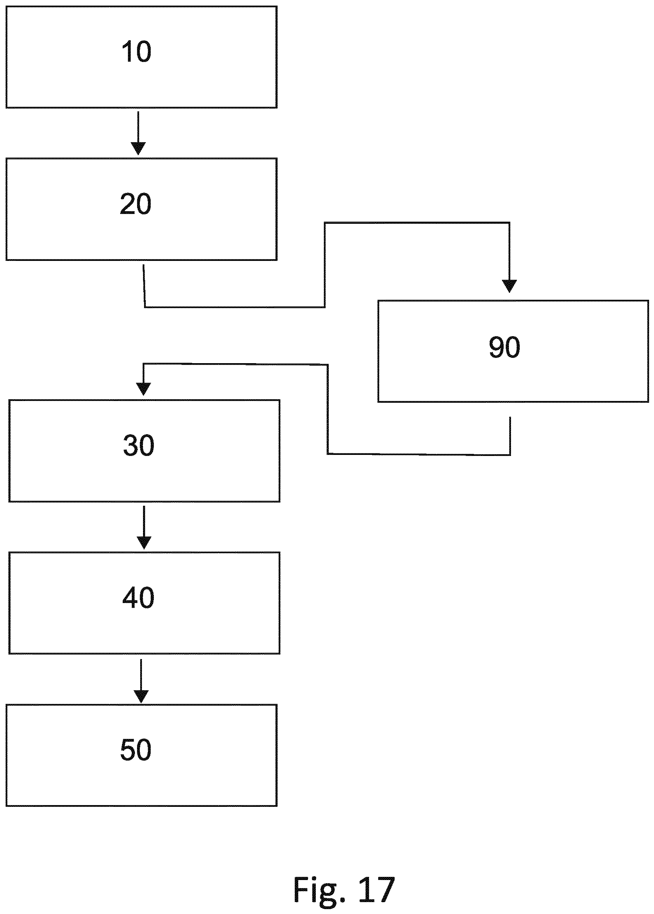

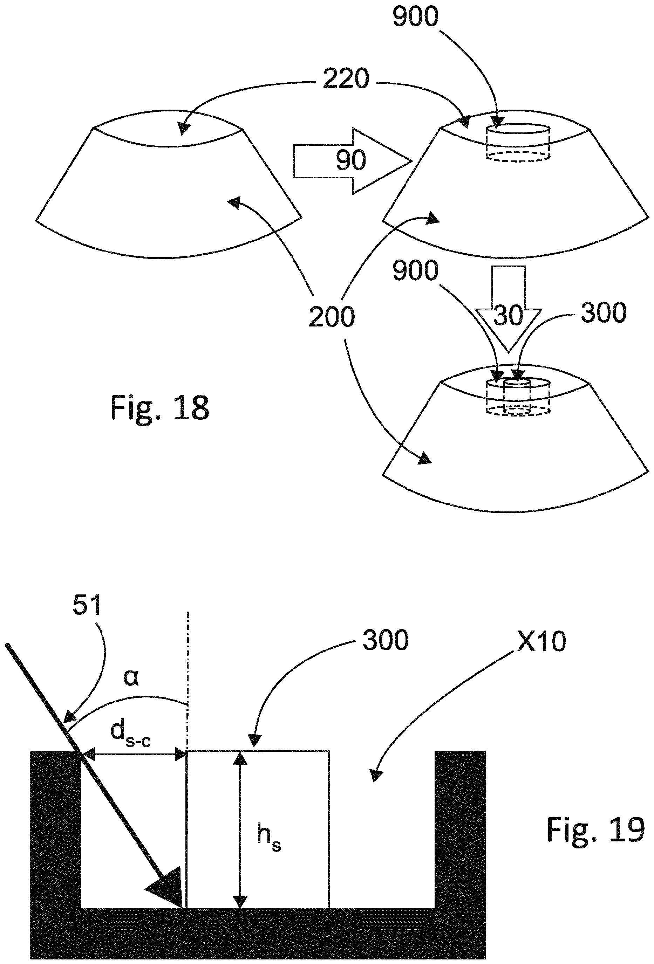

Dans un sixième mode de réalisation illustré sur les figures 17 et 18, le procédé comprend, après l'étape d'usinage (20) de la surface plane (220) et avant l'étape de mise en place de l'échantillon (30), une étape d'usinage (90) d'une cavité (900) ; l'échantillon étant disposé dans cette cavité lors l'étape de mise en place (30), de sorte à former une cavité de mesure autour de l'échantillon.

La cavité (900) est de préférence obtenue à l'aide d'un usinage par faisceau d'ions. De préférence, le faisceau d'ions utilisé pour l'usinage est orienté perpendiculairement à la surface plane du porte-échantillon.

De préférence, le matériau utilisé pour la fabrication du porte-échantillon (200) est transparent aux rayons X. Une attention particulière doit être apportée au choix de ce matériau et il doit être tenu compte aussi bien de l'épaisseur des parois de la cavité (900) que du coefficient d'absorption du matériau utilisé. Le matériau peut notamment être choisi parmi les matériaux à faible nombre atomique Z tels que le quartz, le Lithium, le Béryllium, le graphite ou bien encore un polymère (comme du poly methyl méthacrylate (PMMA)). Si le matériau choisi est un isolant, une étape de dépôt d'une fine couche conductrice est réalisée afin d'éviter le phénomène de charge lors de la deuxième étape de caractérisation (50). Cette étape de dépôt doit être effectuée avant la mise en place de l'échantillon dans la cavité afin que le matériau déposé n'interfère pas avec le signal de l'échantillon (300). Toutefois, si le contraste de signal entre le matériau conducteur déposé et l'échantillon (300) mesuré est suffisamment élevé, cette étape de dépôt peut avoir lieu alors que l'échantillon (300) est déjà en place dans la cavité (900).

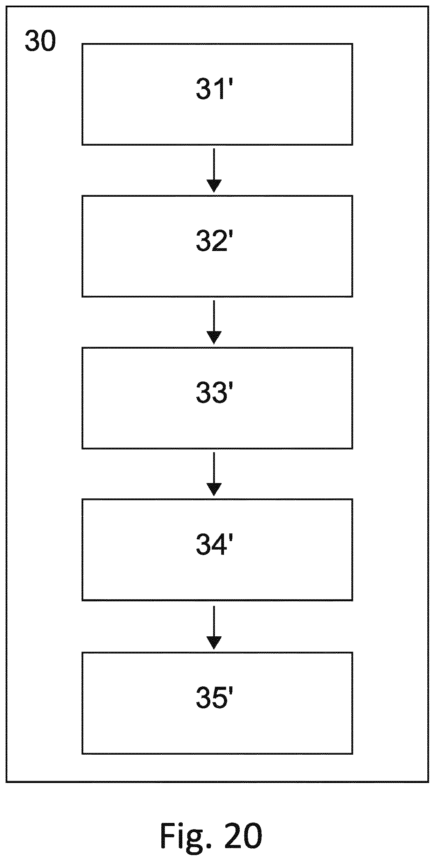

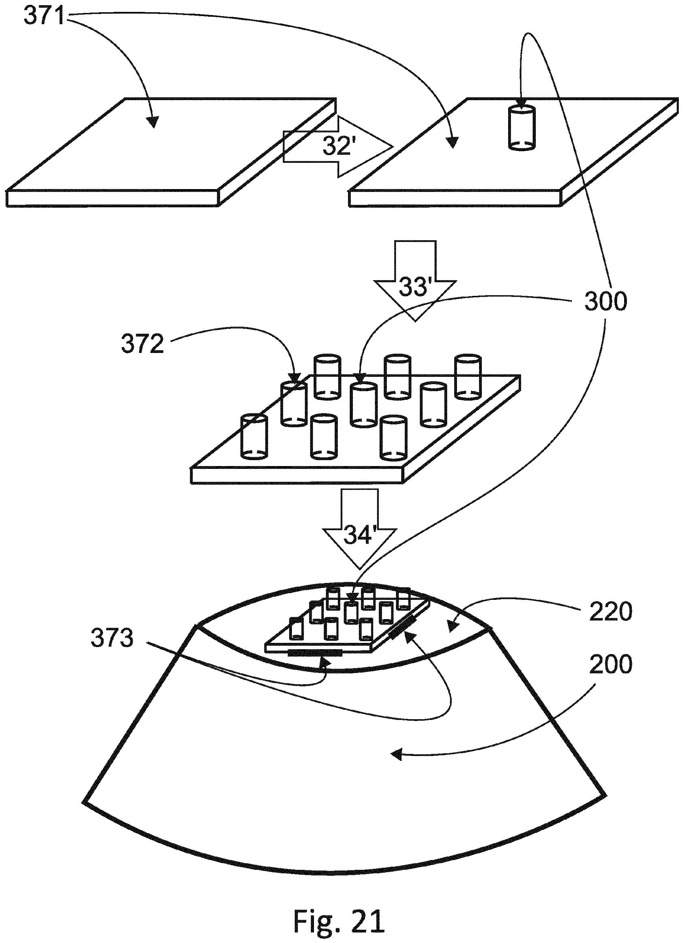

Dans un septième mode de réalisation illustré sur les figures 20 et 21, l'étape de mise en place (30) de l'échantillon (300) comprend une étape de mise à disposition (31') d'un troisième substrat (371) distinct du porte-échantillon (200) ; une étape de mise en place (32') de l'échantillon sur le troisième substrat (371) ; la réalisation (33'), autour de l'échantillon (300), de structures discrètes (372) de forme cylindrique, la hauteur des structures discrètes (372) étant égale à la hauteur de l'échantillon (300) ; une étape de mise en place (34') du troisième substrat (371) sur la surface plane du porte-échantillon (200) ; une étape de soudure (35') du troisième substrat (371) sur la surface plane (220) du porte-échantillon (200) ; les dimensions du troisième substrat (371) étant choisies de sorte que la totalité du troisième substrat (371) repose sur la surface plane (220) du porte-échantillon (200).

De préférence, les structures discrètes (372) sont de forme cylindrique. De préférence, le troisième substrat (371) est de forme carrée. Alternativement, le troisième substrat (371) est de forme cylindrique. De préférence, l'étape de soudure (35') du troisième substrat (371) à la surface plane (220) du porte-échantillon (200) peut se faire par l'intermédiaire d'un dépôt (373) assisté par faisceau de particules chargées. Le matériau utilisé est par exemple du platine.

Comme illustré à la figure 19, dans les modes de réalisation précédemment exposés, les structures disposées autour de l'échantillon permettent de définir une cavité de mesure (X10). Cependant, les parois de cette cavité peuvent gêner le trajet du faisceau d'ions (51) lors de la deuxième étape de caractérisation (50), ledit faisceau ne pouvant pas accéder à la partie la plus basse de l'échantillon (300). Ce phénomène est connu sous le nom d'ombrage. Afin de limiter au maximum cet effet d'ombrage il convient donc de choisir la bonne distance $d_{s-c}$ séparant l'échantillon (300) des parois de la cavité de mesure (X10). Cette distance est donnée par l'expression :

$$d_{s-c} = h_s.\tan(\alpha)$$

où $h_s$ est la hauteur de l'échantillon, tan est la fonction tangente et $\alpha$ est l'angle d'incidence du faisceau d'ions (51) relativement à la normale à la surface du porte-échantillon. Cette expression suppose que la profondeur de la cavité (X10) est sensiblement identique à la hauteur de l'échantillon (300).

Le respect de cette distance influence la qualité de la seconde étape de caractérisation (50). En effet, si la distance séparant les parois de la cavité (X10) de l'échantillon (300) est trop importante, l'influence de la cavité (X10) sur les ions secondaires devient trop faible et la qualité de la mesure lors de la deuxième étape de caractérisation (50) est dégradée. Au contraire, si la distance est trop faible, le faisceau n'a pas accès à la partie basse de l'échantillon (300) et l'analyse de ce dernier se fait donc de manière incomplète.

Dans le mode de réalisation illustré dans les figures 10, 11 et 11, la distance $d_{s-c}$ est fixée par les dimensions de la structure de manipulation (640), et en particulier sa largeur, et par la distance séparant la structure de manipulation (640) de l'échantillon (300). Dans ce mode de réalisation, lorsque l'on précise que la deuxième structure de fixation (630) est proche de la première structure de fixation (310), on entend par là que la distance séparant la première structure de fixation de la deuxième structure de fixation est telle que, lorsque l'échantillon (300) est dans la cavité (610), la distance $d_{s-c}$ respecte la relation précédemment établie.

Dans le mode de réalisation illustré dans les figures 13 et 14, la profondeur de la cavité (710) doit être comprise comme la hauteur de la structure percée d'un orifice.

De la même manière, dans le mode de réalisation illustré dans les figures 15 et 16, la profondeur de la cavité (810) doit être comprise comme la hauteur de la structure obtenue par croissance.

Dans le mode de réalisation illustré dans les figures 20 et 21, la cavité est en fait constituée par les structures discrètes qui agissent de manière similaire sur les lignes de champs, c'est-à-dire que leur présence contribue à l'orientation des ions émis dans la direction de l'extracteur. La profondeur de la cavité doit donc être comprise comme étant la hauteur des structures discrètes et la distance d$_{s-c}$ correspond à la distance séparant la structure discrète la plus proche de l'échantillon de l'échantillon lui-même.

**Revendications**

1. Procédé de caractérisation d'un échantillon (300) combinant une technique de caractérisation par tomographie par rayons X et une technique de caractérisation par spectrométrie de masse à ionisation secondaire, **caractérisé en ce qu'**il comprend :

   - une étape (10) de mise à disposition d'une pointe (100), la pointe comprenant une première surface d'extrémité (110), une deuxième surface d'extrémité (120), une première région cylindrique (101) portant la première surface d'extrémité (110) et une deuxième région (102) en contact avec la première région cylindrique (101) et s'affinant vers la deuxième surface d'extrémité (120) ;
   - une étape d'usinage (20) de la deuxième région (102) de sorte à obtenir un porte-échantillon (200) comprenant une surface plane (220), la surface plane formant une surface d'extrémité du porte-échantillon (200), l'aire de ladite surface plane (220) étant inférieure à l'aire de la première surface d'extrémité (110) ;
   - une étape de mise en place (30) de l'échantillon (300) sur la surface plane (220) du porte-échantillon (200) ;
   - une première étape de caractérisation (40) de l'échantillon (300) à l'aide d'une technique de caractérisation par tomographie par rayons X ;
   - une deuxième étape de caractérisation (50) de l'échantillon (300) à l'aide d'une technique de caractérisation par spectrométrie de masse à ionisation secondaire.

2. Procédé selon la revendication précédente **caractérisé en ce que** l'étape de mise en place (30) de l'échantillon (300) comprend :

   - une étape d'usinage (31) d'une première structure de fixation (310) sur la surface plane (220) du porte-échantillon (200) ;
   - une étape de mise en place (32) de l'échantillon (300) sur la surface plane (220) du porte-échantillon (200), au niveau de la première structure de fixation (310) ;
   - une étape de soudure (33) de l'échantillon (300) sur la surface plane (220) du porte-échantillon (200), au niveau de la première structure de fixation (310).

3. Procédé selon la revendication précédente **caractérisé en ce qu'**il comprend en outre, après la première étape de caractérisation (40) et avant la deuxième étape de caractérisation (50) :

   - une étape d'usinage (61), dans un premier substrat (600) distinct du porte-échantillon (200), d'une cavité (610), dite cavité de mesure ;
   - une étape d'usinage (62) d'une deuxième structure de fixation (630), proche de la première structure de fixation (310), sur la surface plane (220) du porte-échantillon (200) ;
   - une étape de mise en place (63) d'une structure de manipulation (640) sur la surface plane (220) du porte-échantillon (200) au niveau de la deuxième structure de fixation (630) ;
   - une étape de soudure (64) de la structure de manipulation (640) sur la surface plane (220) du porte-échantillon (200), au niveau de la deuxième structure de fixation (630) ;
   - une étape d'usinage (65) d'une partie de la surface plane (220) du porte-échantillon (200) de sorte à libérer une région (650) comprenant les première (310) et deuxième structures (630) de fixation et ainsi former un deuxième porte-échantillon (660) ;
   - une étape de mise (66) en place du deuxième porte-échantillon (660), à l'aide de la structure de manipulation (640), dans la cavité (610) de mesure aménagée sur le premier substrat (600).

4. Procédé selon l'une des revendications 1 ou 2 **caractérisé en ce qu'**il comprend en outre, après la première étape de caractérisation (40) et avant la deuxième étape de caractérisation (50) :

   - une étape d'usinage (71), dans un deuxième substrat (700) distinct du porte-échantillon (200), d'un premier orifice (710) ;
   - une étape d'usinage (72), autour du premier orifice (710), d'une structure (720') de dimensions sensiblement égales à celles de la surface plane (220) du porte-échantillon (200), de sorte à obtenir un premier élément (720) percé d'un orifice (710) ;
   - une étape de mise en place (73) du premier élément (720) percé d'un orifice (710) sur la surface plane (220) du porte-échantillon (200) de sorte que l'échantillon (300) se situe dans l'orifice (710) dudit premier élément (720) ;
   - une étape de soudure (74) du premier élément (720) percé d'un orifice (710) à la surface plane (220) du porte-échantillon (200) ;

   l'orifice (710) venant réaliser une cavité de mesure autour de l'échantillon (300).

5. Procédé selon l'une des revendications 1 ou 2 **ca-**

**ractérisé en ce qu'**il comprend en outre, après la première étape de caractérisation (40) et avant la deuxième étape de caractérisation (50), une étape de dépôt (80) assisté par faisceau de particules chargées d'une structure (800) entourant l'échantillon (300), la structure venant réaliser une cavité (810), dite cavité de mesure, autour de l'échantillon (300).

6. Procédé selon la revendication 5 **caractérisé en ce que** la structure (800) déposée est de forme demi-cylindrique ou cylindrique.

7. Procédé selon la revendication 1 caractérisé en ce le matériau du porte-échantillon (200) est transparent aux rayons X et en ce que le procédé comprend en outre, après l'étape d'usinage (20) de la surface plane (220) et avant l'étape de mise en place (30) de l'échantillon (300), une étape d'usinage (90) d'une cavité (900); l'échantillon (300) étant disposé dans cette cavité (900) lors l'étape de mise en place (30), de sorte que la cavité (900) forme une cavité de mesure autour de l'échantillon.

8. Procédé selon les revendications 2 et 7 **caractérisé en ce que** la première structure de fixation est située au fond de la cavité de mesure.

9. Procédé selon l'une quelconques des revendications 3 à 8 **caractérisé en ce que** la distance $d_{s-c}$ entre l'échantillon (300) et les parois de la cavité de mesure est donnée par :

$$d_{s-c} = h_s.\tan(\alpha)$$

où $h_s$ est la hauteur de l'échantillon, tan est la fonction tangente et $\alpha$ est l'angle d'incidence du faisceau d'ions relativement à la surface plane (220) du porte-échantillon (200).

10. Procédé selon la revendication 1 **caractérisé en ce que** l'étape de mise en place de l'échantillon comprend :

   - une étape de mise à disposition (31') d'un troisième substrat (371) distinct du porte-échantillon (200) ;
   - une étape de mise en place (32') de l'échantillon sur le troisième substrat (371) ;
   - la réalisation (33'), autour de l'échantillon (300), de structures discrètes (372), la hauteur des structures (372) étant égale à la hauteur de l'échantillon (300) ;
   - une étape de mise en place (34') du troisième substrat sur la surface plane (220) du porte-échantillon (200) ;
   - une étape de soudure (35') du troisième substrat (371) sur la surface plane (220) du porte-échantillon (200) ;

les dimensions du troisième substrat (371) étant choisies de sorte que la totalité du troisième substrat (371) repose sur la surface plane (220) du porte-échantillon (200).

**Patentansprüche**

1. Charakterisierungsverfahren einer Probe (300), die eine Charakterisierungstechnik per Tomographie per Röntgenstrahlen und eine Charakterisierungstechnik per sekundärer Ionisations-Massenspektrometrie kombiniert, **dadurch gekennzeichnet, dass** es umfasst:

   - einen Bereitstellungsschritt (10) einer Spitze (100), wobei die Spitze eine erste End-Oberfläche (110), eine zweite End-Oberfläche (120), einen die erste End-Oberfläche (110) tragende erste zylindrische Region (101) und eine zweite Region (102) umfasst, die mit der ersten zylindrischen Region (101) in Kontakt ist und sich zur zweiten End-Oberfläche (120) hin verjüngt;
   - einen Bearbeitungsschritt (20) der zweiten Region (102) derart, dass ein Probenträger (200), umfassend eine ebene Oberfläche (220) erhalten wird, wobei die ebene Oberfläche eine End-Oberfläche des Probenträgers (200) umfasst, wobei die genannte ebene Oberfläche (220) geringer ist als der Bereich der ersten End-Oberfläche (110);
   - einen Einrichtungsschritt (30) der Probe (300) auf der ebenen Oberfläche (220) des Probenträgers (200);
   - einen ersten Charakterisierungsschritt (40) der Probe (300) mithilfe einer Charakterisierungstechnik per Tomographie per Röntgenstrahlen;
   - einen zweiten Charakterisierungsschritt (50) der Probe (300) mithilfe einer Charakterisierungstechnik per sekundärer Ionisations-Massenspektrometrie.

2. Verfahren gemäß dem voranstehenden Anspruch, **dadurch gekennzeichnet, dass** der Einrichtungsschritt (30) der Probe (300) umfasst:

   - einen Bearbeitungsschritt (31) einer ersten Befestigungsstruktur (310) auf der ebenen Oberfläche (220) des Probenträgers (200);
   - einen Einrichtungsschritt (32) der Probe (300) auf der ebenen Oberfläche (220) des Probenträgers (200) an der ersten Befestigungsstruktur (310);
   - einen Verschweißungsschritt (33) der Probe (300) auf der ebenen Struktur (200) des Probenträgers (200) an der ersten Befestigungsstruktur (310).

3. Verfahren gemäß dem voranstehenden Anspruch, **dadurch gekennzeichnet, dass** es darüber hinaus nach dem ersten Charakterisierungsschritt (40) und vor dem zweiten Charakterisierungsschritt (50) umfasst:

- einen Bearbeitungsschritt (61) einer Ausnehmung (610), bezeichnet als Messausnehmung, in einem ersten, von dem Probenträger (200) unterschiedlichen Substrat (600);
- einen Bearbeitungsschritt (62) einer zweiten Befestigungsstruktur (630) in der Nähe der ersten Befestigungsstruktur (310) auf der ebenen Oberfläche (220) des Probenträgers (200);
- einen Einrichtungsschritt (63) einer Handhabungsstruktur (640) auf der ebenen Oberfläche (220) des Probenträgers (200) an der zweiten Befestigungsstruktur (630);
- einen Verschweißungsschritt (64) der Handhabungsstruktur (640) auf der ebenen Oberfläche (220) des Probenträgers (200) an der zweiten Befestigungsstruktur (630);
- einen Bearbeitungsschritt (65) eines Teils der ebenen Oberfläche (220) des Probenträgers (200) derart, dass eine Region (650), umfassend die ersten (310) und zweiten Befestigungsstrukturen (630), freigesetzt wird und somit einen zweiten Probenträger (660) bildet;
- einen Einrichtungsschritt (66) des zweiten Probenträgers (660) mithilfe der Handhabungsstruktur (640) in der auf dem ersten Substrat (600) eingerichteten Messausnehmung (610).

4. Verfahren gemäß einem der Ansprüche 1 oder 2, **dadurch gekennzeichnet, dass** es darüber hinaus nach dem ersten Charakterisierungsschritt (40) und vor dem zweiten Charakterisierungsschritt (50) umfasst:

- einen Bearbeitungsschritt (71) einer ersten Öffnung (710) in einem zweiten, von dem Probenträger (200) unterschiedlichen Substrat (700),
- einen Bearbeitungsschritt (72) einer Struktur (720') mit deutlich gleichen Abmessungen wie denen der ebenen Oberfläche (220) des Probenträgers (200) um eine erste Öffnung (720) derart, dass ein mit einer Öffnung (710) durchbohrtes erstes Element (720) erhalten wird;
- einen Einrichtungsschritt (73) des ersten mit einer Öffnung (710) durchbohrten Elements (720) auf der ebenen Oberfläche (220) des Probenträgers (200) derart, dass die Probe (300) in der Öffnung (710) des genannten ersten Elements (720) angeordnet ist;
- einen Verschweißungsschritt (74) des ersten, mit einer Öffnung (710) durchbohrten Elements (720) an der ebenen Oberfläche (220) des Probenträgers (200);

wobei die Öffnung (710) eine Messausnehmung um die Probe (300) realisiert.

5. Verfahren gemäß einem der Ansprüche 1 oder 2, **dadurch gekennzeichnet, dass** es darüber hinaus nach dem ersten Charakterisierungsschritt (40) und vor dem zweiten Charakterisierungsschritt (50) einen Aufbringungsschritt (80) umfasst, der per geladenem Partikelstrahl einer Struktur (800) unterstützt wird, die die Probe (300) umgibt, wobei die Struktur eine als Messausnehmung bezeichnete Ausnehmung (810) um die Probe (300) realisiert.

6. Verfahren gemäß Anspruch 5, **dadurch gekennzeichnet, dass** die aufgebrachte Struktur (800) eine halbzylindrische oder zylindrische Form aufweist.

7. Verfahren gemäß Anspruch 1, **dadurch gekennzeichnet, dass** das Material des Probenträgers (200) für Röntgenstrahlen transparent ist und dass das Verfahren darüber hinaus nach dem Bearbeitungsschritt (20) der ebenen Oberfläche (220) und vor dem Einrichtungsschritt (30) der Probe (300) einen Bearbeitungsschritt (90) einer Ausnehmung (900) umfasst; wobei die Probe bei dem Einrichtungsschritt (30) in dieser Ausnehmung (900) derart angeordnet ist, dass die Ausnehmung (900) eine Messausnehmung um die Probe bildet.

8. Verfahren gemäß den Ansprüchen 2 und 7, **dadurch gekennzeichnet, dass** die erste Befestigungsstruktur am Boden der Messausnehmung angeordnet ist.

9. Verfahren gemäß irgendeinem der Ansprüche 3 bis 8, **dadurch gekennzeichnet, dass** die Entfernung $d_{s\text{-}c}$ zwischen der Probe (300) und den Wänden der Messausnehmung angegeben wird durch:

$$d_{s\text{-}c} = h_s \cdot \tan(\alpha)$$

wobei $h_s$ die Höhe der Probe ist, tan die Tagentenfunktion ist und $\alpha$ der Einfallswinkel des Ionenstrahls relativ zu der ebenen Oberfläche (220) des Probenträgers (200) ist.

10. Verfahren gemäß Anspruch 1, **dadurch gekennzeichnet, dass** der Bereitstellungsschritt der Probe umfasst:

- einen Bereitstellungsschritt (31') eines von dem Probenträger (200) unterschiedlichen dritten Substrats (371);

- einen Bereitstellungsschritt (32') der Probe auf dem dritten Substrat (371);
- um die Probe (300) die Realisierung von diskreten Strukturen (372), wobei die Höhe der Strukturen (372) gleich der Höhe der Probe (300) ist;
- einen Bereitstellungsschritt (34') des dritten Substrats auf der ebenen Oberfläche (220) des Probenträgers (200);
- einen Verschweißungsschritt (35') des dritten Substrats (371) auf der ebenen Oberfläche (220) des Probenträgers (200);

wobei die Abmessungen des dritten Substrats (371) derart ausgewählt sind, dass die Gesamtheit des dritten Substrats (371) auf der ebenen Oberfläche (220) des Probenträgers (200) ruht.

**Claims**

1. Method for characterizing a sample (300) combining an X-ray tomography characterization technique and a secondary ionization mass spectrometry characterization technique, **characterized in that** it comprises:

   - a step (10) of providing a tip (100), the tip comprising a first end surface (110), a second end surface (120), a first cylindrical region (101) bearing the first end surface (110) and a second region (102) in contact with the first cylindrical region (101) and becoming slimmer towards the second end surface (120);
   - a step of machining (20) the second region (102) so as to obtain a sample holder (200) comprising a flat surface (220), the flat surface forming an end surface of the sample holder (200), the area of said flat surface (220) being less than the area of the first end surface (110);
   - a step of placing (30) the sample (300) on the flat surface (220) of the sample holder (200);
   - a first step of characterization (40) of the sample (300) using an X-ray tomography characterization technique;
   - a second step of characterization (50) of the sample (300) using a secondary ionization mass spectrometry characterization technique.

2. Method according to the preceding claim **characterized in that** the step of placing (30) the sample (300) comprises:

   - a step of machining (31) a first fixation structure (310) on the flat surface (220) of the sample holder (200);
   - a step of placing (32) the sample (300) on the flat surface (220) of the sample holder (200), at the level of the first fixation structure (310);
   - a step of welding (33) the sample (300) onto the flat surface (220) of the sample holder (200), at the level of the first fixation structure (310).

3. Method according to the preceding claim **characterized in that** it further comprises, after the first characterization step (40) and before the second characterization (50) step:

   - a step of machining (61), in a first substrate (600) separate from the sample holder (200), a cavity (610), said measurement cavity;
   - a step of machining (62) a second fixation structure (630), close to the first fixation structure (310), on the flat surface (220) of the sample holder (200);
   - a step of placing (63) a manipulation structure (640) on the flat surface (220) of the sample holder (200) at the level of the second fixation structure (630);
   - a step of welding (64) the manipulation structure (640) onto the flat surface (220) of the sample holder (200), at the level of the second fixation structure (630);
   - a step of machining (65) a part of the flat surface (220) of the sample holder (200) so as to free a region (650) comprising the first (310) and second fixation structures (630) and thus form a second sample holder (660);
   - a step of placing (66) the second sample holder (660), using the manipulation structure (640), in the measurement cavity (610) made on the first substrate (600).

4. Method according to one of claims 1 or 2 **characterized in that** it further comprises, after the first characterization step (40) and before the second characterization (50) step:

   - a step of machining (71), in a second substrate (700) separate from the sample holder (200), a first orifice (710);
   - a step of machining (72), around the first orifice (710), a structure (720') of dimensions substantially equal to those of the flat surface (220) of the sample holder (200), so as to obtain a first element (720) pierced by an orifice (710);
   - a step of placing (73) the first element (720) pierced by an orifice (710) on the flat surface (220) of the sample holder (200) such that the sample (300) is situated in the orifice (710) of said first element (720);
   - a step of welding (74) the first element (720) pierced by an orifice (710) onto the flat surface (220) of the sample holder (200);

the orifice (710) forming a measurement cavity around the sample (300).

5. Method according to one of claims 1 or 2 **characterized in that** it further comprises, after the first characterization step (40) and before the second characterization step (50), a step of charged particle beam assisted deposition (80) of a structure (800) surrounding the sample (300), the structure forming a cavity (810), said measurement cavity, around the sample (300).

6. Method according to claim 5 **characterized in that** the deposited structure (800) is of half-cylindrical or cylindrical shape.

7. Method according to claim 1 **characterized in that** the material of the sample holder (200) is transparent to X-rays and **in that** the method further comprises, after the step of machining (20) the flat surface (220) and before the step of placing (30) the sample (300), a step of machining (90) a cavity (900); the sample (300) being arranged in this cavity (900) during the placing step (30), such that the cavity (900) forms a measurement cavity around the sample.

8. Method according to claims 2 and 7 **characterized in that** the first fixation structure is situated at the bottom of the measurement cavity.

9. Method according to any of claims 3 to 8 **characterized in that** the distance $d_{s-c}$ between the sample (300) and the walls of the measurement cavity is given by:

$$d_{s-c} = h_s.\tan(\alpha)$$

where $h_s$ is the height of the sample, tan is the tangent function and $\alpha$ is the incidence angle of the ion beam relative to the flat surface (220) of the sample holder (200).

10. Method according to claim 1 **characterized in that** the step of placing the sample comprises:

   - a step of providing (31') a third substrate (371) separate from the sample holder (200);
   - a step of placing (32') the sample on the third substrate (371);
   - the production (33'), around the sample (300), of discrete structures (372), the height of the structures (372) being equal to the height of the sample (300);
   - a step of placing (34') the third substrate on the flat surface (220) of the sample holder (200);
   - a step of welding (35') the third substrate (371) onto the flat surface (220) of the sample holder (200);

the dimensions of the third substrate (371) being chosen such that the totality of the third substrate (371) rests on the flat surface (220) of the sample holder (200).

1010

1011

1020

1012

300

Fig. 1

1120

1112

1111

1110

1113

300

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

900

220

90

900

200

900    30    300

Fig. 18

51

α

$d_{s-c}$

300    X10

$h_s$

Fig. 19

30

31'

32'

33'

34'

35'

Fig. 20

371

32'

300

33'

372

34'

373

220

200

Fig. 21

## RÉFÉRENCES CITÉES DANS LA DESCRIPTION

**Littérature non-brevet citée dans la description**

- **SEBASTIAN BEHRENS et al.** Linking environmental processes to the in situ functioning of microorganisms by high-resolution secondary ion mass spectrometry (NanoSIMS) and scanning transmission X-ray microscopy (STXM). *ENVIRONMENTAL MICROBIOLOGY,* 12 Mars 2012, vol. 14 (11), 2851-2869